# EUROPÄISCHE PATENTANMELDUNG

(11) **EP 1 343 120 A2**
(43) Veröffentlichungstag der Anmeldung: **10.09.2003**
(21) Anmeldenummer: 02102607.5
(22) Anmeldetag: 20.11.2002
(51) Int. Cl.: G06T 17/40

(54) **Verfahren und Vorrichtung zur simultanen Darstellung von beliebig wählbaren komplementären Schnittbildern**

(30) Priorität: 22.11.2001 DE 10157268
(71) Anmelder: Philips Intellectual Property & Standards GmbH, 20099 Hamburg (DE); Koninklijke Philips Electronics N.V., 5621 BA Eindhoven (NL)
(72) Erfinder: Koppe, Reiner Heinrich, Postfach 50 04 42 52088, Aachen (DE); Klotz, Erhard Paul Artur, Postfach 50 04 42 52088, Aachen (DE); Op de Beek, John, Postfach 50 04 42 52088, Aachen (DE)
(74) Vertreter: Volmer, Georg, Dipl.-Ing.

(57) **Zusammenfassung**

Die Erfindung betrifft ein Verfahren zur simultanen Darstellung von wenigstens zwei Schnittbildern durch ein aus einem 3D-Bilddatensatz rekonstruiertes Volumen. Um eine verbesserte Bilddarstellung zu erreichen, wird erfindungsgemäß ein Verfahren mit den folgenden Schritten vorgeschlagen:
a) Erstellung und Darstellung einer Visualisierung des Volumens,
b) Festlegung eines Drehpunktes in dem visualisierten Volumen,
c) Auswahl einer variablen durch den Drehpunkt verlaufenden Schnittebene durch das visualisierte Volumen,
d) simultane Darstellung zweier komplementärer Schnittbilder jeweils eines von zwei durch die Schnittebene getrennten Teil-Volumina des Volumens.

## Beschreibung

Die Erfindung betrifft ein Verfahren und eine Vorrichtung zur simultanen Darstellung von wenigstens zwei Schnittbildern durch ein aus einem 3D-Bilddatensatz rekonstruiertes Volumen.

In der WO 98/32371 A1 ist ein CT -Verfahren beschrieben, bei dem aus einem 3D-Datensatz eines Volumens mehrere Bilder erstellt und gleichzeitig für diagnostische Zwecke dargestellt werden. Beispielsweise wird vorgeschlagen, eine Schnittebene durch das Volumen zu definieren und ein Paar axialer Bilder darzustellen, wobei das eine Bild ein erstes Teilvolumen aus einer ersten Richtung und das zweite Bild ein zweites, komplementäres Teilvolumen aus entgegengesetzter Richtung darstellt. Anschaulich ist diese Darstellungsmethode vergleichbar mit dem Halbieren eines Apfels und der Betrachtung der jeweiligen Schnittfläche der beiden Apfelhälften.

Der Erfindung liegt die Aufgabe zugrunde, das bekannte Darstellungsverfahren zu verbessern Diese Aufgabe wird erfindungsgemäß durch ein Verfahren gemäß Anspruch 1 gelöst, das die folgenden Schritte aufweist:
a) Erstellung und Darstellung einer Visualisierung des Volumens,
b) Festlegung eines beliebig wählbaren Drehpunktes in dem visualisierten Volumen,
c) Auswahl einer variablen durch den Drehpunkt verlaufenden Schnittebene durch das visualisierte Volumen,
d) simultane Darstellung zweier komplementärer Schnittbilder jeweils eines von zwei durch die Schnittebene getrennten Teil-Volumina des Volumens

Der Erfindung liegt dabei die Erkenntnis zugrunde, dass bei dem bekannten Darstellungsverfahren bei einer Drehung der Schnittebene um einen einzigen möglichen Drehpunkt möglicherweise interessierende Objektdetails, die nicht zwingenderweise in der Schnittebene liegen, in gedrehten Bildern nicht mehr vorhanden sind, also quasi aus dem Bild "herauswandern". Um diese Objektdetails darstellen zu können, müsste deshalb erneut eine Schnittebene definiert werden, die wieder durch die interessierenden Objektdetails verläuft, es müsste somit eine neue "Fokussierung" auf diese Objektdetails vorgenommen werden.

Zur Vermeidung dieses Problems wird deshalb erfindungsgemäß vorgeschlagen, in dem visualisierten Volumen einen frei wählbaren Drehpunkt festzulegen, durch den dann die Schnittebene verläuft und um den die Schnittebene auch gedreht werden kann. Vorzugsweise wird dieser Drehpunkt an Stellen mit wichtigen Objektdetails definiert, z.B. bei komplexen Gefäßmissbildungen wie beispielsweise Aneurysmen, AVMs oder Stenosen, oder auch bei Knochenbrüchen. Weiter ist vorgesehen, dass entlang der durch den Drehpunkt verlaufenden Schnittebene jeweils zwei komplementäre Schnittbilder dargestellt werden, also beispielsweise bei horizontal verlaufender Schnittebene ein Schnittbild des oberhalb der Schnittebene liegenden Teilvolumens des Volumens und ein komplementäres Schnittbild des unterhalb der Schnittebene liegenden Teilvolumens des Volumens. Somit kann es nicht mehr passieren, dass bei einer Drehung der Schnittebenen die um den Drehpunkt liegenden interessierenden Objektdetails aus den dargestellten Schnittbildern "herauswandern", da diese interessierenden Objektdetails ja immer in der Schnittebene liegen unabhängig von der Lage der Schnittebene.

Zur Erhöhung des diagnostischen Wertes der dargestellten Bilder ist vorzugsweise vorgesehen, dass mehrere durch den Drehpunkt verlaufende Schnittebenen ausgewählt werden und dass jeweils zwei komplementäre Schnittbilder je Schnittebene dargestellt werden. Der diagnostizierende Arzt kann somit also mehrere Schnittebenen durch den Drehpunkt definieren, um aus verschiedenen Richtungen Darstellungen der um den Drehpunkt herum liegenden Objektdetails zu erhalten.

Weiter ist bevorzugt vorgesehen, dass die Schnittebene in dem Drehpunkt drehbar ist und dass bei einer Drehung der Schnittbilder die Darstellung der komplementären Schnittbilder unmittelbar an die veränderte Lage der Schnittbilder angepasst wird. Der diagnostizierende Arzt kann also, beispielsweise mit einer Computermaus, die Schnittebene um den Drehpunkt drehen oder kippen, erhält dabei aber gleichzeitig immer die beiden komplementären Schnittbilder, die an die neue Lage der Schnittebene angepasst sind.

Neben der Lage der Schnittebene ist weiter bevorzugt auch der Betrachtungswinkel jedes einzelnen Schnittbildes individuell Wählbar. Dies ist insbesondere dann von Bedeutung, wenn die dargestellten Schnittbilder einen dreidimensionalen Eindruck des dargestellten Teilvolumens vermitteln, wenn es sich also beispielsweise um "volume-rendered" Bilder handelt. Alternativ können die Schnittbilder jedoch auch 2D-Projektionsbilder oder Maximum-Intensitäts-Projektionsbilder sein.

Eine erfindungsgemäße Vorrichtung zur Durchführung des beschriebenen Verfahrens ist in Anspruch 6 angegeben. Die Erfindung betrifft darüber hinaus auch ein Computerprogramm gemäß Anspruch 7 mit Programmmitteln zur Veranlassung eines Computers zur Ausführung der Schritte des Verfahrens nach Anspruch 1.

Die Erfindung wird nachfolgend anhand der Zeichnungen näher erläutert. Es zeigen:
Fig 1: ein Flussdiagramm zur Erläuterung des erfindungsgemäßen Verfahrens und
Fig. 2: eine Darstellung eines Volumens mit zwei Schnittebenen.

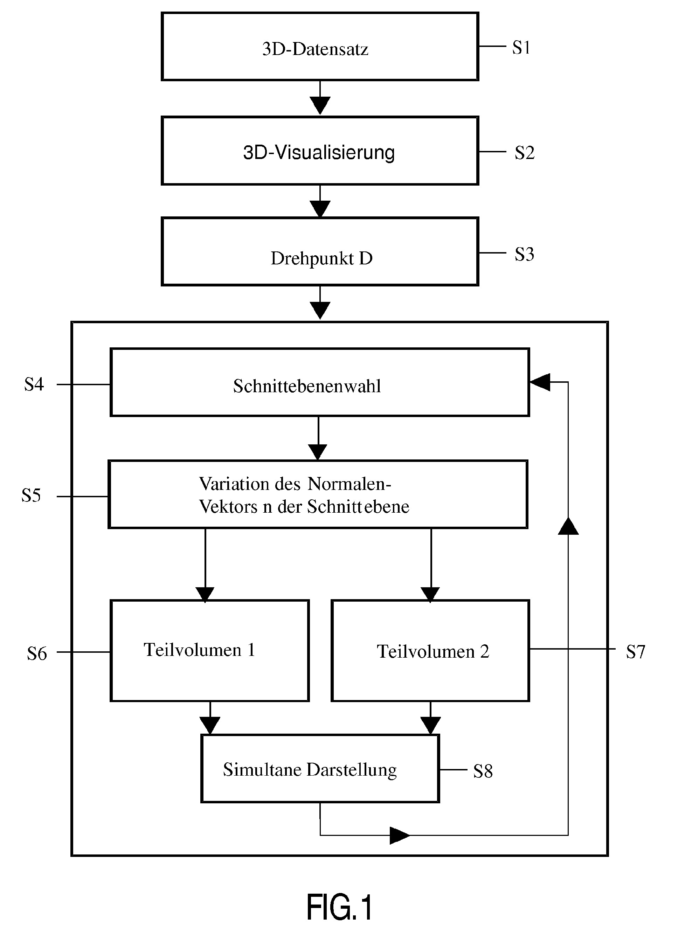

In Fig. 1 ist ein Flussdiagramm zur Erläuterung des erfindungsgemäßen Verfahrens gezeigt. Zunächst wird demnach in einem ersten Schritt S1 ein 3D-Bilddatensatz eines Volumens rekonstruiert. In einem zweiten Schritt S2 wird danach das Volumen visualisiert, beispielsweise wird eine dreidimensionale Darstellung des Volumens erstellt und auf einem Monitor angezeigt. Der diagnostizierende Arzt kann danach in dieser Darstellung einen Drehpunkt in Schritt S3 definieren. Bevorzugt wird ein solcher Drehpunkt mittels eines dreidimensionalen Cursors an einer Stelle definiert, an der wichtige Objektdetails liegen, die zu diagnostischen Zwecken aus unterschiedlichen Richtungen betrachtet werden sollen.

In dem visualisierten Volumen kann dann in Schritt S4 eine (oder mehrere) Schnittebene(n) gewählt werden, die durch den vorher festgelegten Drehpunkt verläuft (verlaufen). Die Lage dieser Schnittebene ist in dem nachfolgenden Schritt S5 auf einfache Weise veränderbar, kann insbesondere um den Drehpunkt gedreht oder gekippt werden. Dies erfolgt vorzugsweise durch Variation des Normalen-Vektors n der Schnittebene, beispielsweise mittels einer Steuerung durch die Computermaus am Bildschirm. Anhand der Schnittebene wird danach in Schritten S6 und S7 das Volumen in zwei Teil-Volumina 1 und 2 unterteilt, die komplementär zueinander liegen, d.h., dass das Teilvolumen 1 beispielsweise oberhalb und das Teilvolumen 2 unterhalb der momentanen Schnittebene liegt. Schließlich kann dann in Schritt S8 die simultane Darstellung der beiden Teil-Volumina 1 und 2 erfolgen, beispielsweise durch Darstellung von "volume-rendered" Bildern, die einen dreidimensionalen Eindruck des jeweiligen Teilvolumens vermitteln.

Wie aus Fig 1 ersichtlich ist, bilden die Schritte S4 bis S8 eine Schleife, können also nach Festlegung des Drehpunktes in Schritt S3 immer wieder neu ablaufen. Insbesondere kann die Lage der Schnittebene immer wieder verändert werden, wobei alle Schnittebenen immer durch den Drehpunkt verlaufen, so dass die im Drehpunkt liegenden interessierenden Objektdetails immer in den letztlich in Schritt S8 simultan dargestellten Bildern zu sehen sind. Zusätzlich können aber auch andere Parameter verändert werden. Beispielsweise kann die Art der Darstellung der Bilder verändert werden, so dass statt "volume-rendered" Bilder auch Projektionsbilder oder andere Bilder der Teil-Volumina erzeugt und dargestellt werden.

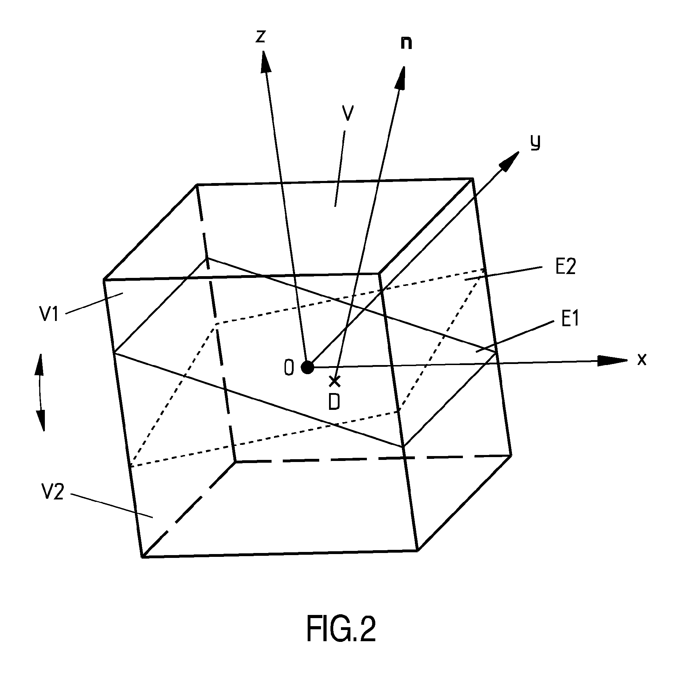

Ein Volumen V ist zur besseren Verdeutlichung in Fig. 2 gezeigt. Dieses ist mittels der Schnittebene E1, die durch den Drehpunkt D verläuft, in zwei Teil-Volumina V1 und V2 unterteilt. Durch Variation des Normalen-Vektors n der Schnittebene E1 kann die Lage der Schnittebene verändert werden. Eine solch veränderte Lage ist als Schnittebene E2 gezeigt, die ebenfalls durch den Drehpunkt D verläuft, das Volumen V aber in andere Teil-Volumina unterteilt. Erfindungsgemäß wird in jeder Lage der Schnittebene ein Schnittbild jeweils des ersten und zweiten Teilvolumens V1 und V2 dargestellt, das von der Schnittebene aus erstellt ist, vergleichbar der eingangs erwähnten Betrachtung der Schnittflächen zweier Apfelhälften.

Erfindungsgemäß kann zusätzlich auch, bei fester Lage der Schnittebene, der Betrachtungswinkel der Schnittflächen verändert werden, was insbesondere bei einen dreidimensionalen Eindruck vermittelnden Bildern vorteilhaft sein kann.

## Patentansprüche

1. Verfahren zur simultanen Darstellung von wenigstens zwei Schnittbildern durch ein aus einem 3D-Bilddatensatz rekonstruiertes Volumen mit den Schritten:
a) Erstellung und Darstellung einer Visualisierung des Volumens,
b) Festlegung eines Drehpunktes in dem visualisierten Volumen,
c) Auswahl einer variablen durch den Drehpunkt verlaufenden Schnittebene durch das visualisierte Volumen,
d) simultane Darstellung zweier komplementärer Schnittbilder jeweils eines von zwei durch die Schnittebene getrennten Teil-Volumina des Volumens

2. Verfahren nach Anspruch 1,
**dadurch gekennzeichnet,**
**dass** mehrere durch den Drehpunkt verlaufende Schnittebenen ausgewählt werden und dass jeweils zwei komplementäre Schnittbilder je Schnittebene dargestellt werden.

3. Verfahren nach Anspruch 1,
**dadurch gekennzeichnet,**
**dass** die Schnittebene um den Drehpunkt drehbar ist und dass bei einer Drehung der Schnittbilder die Darstellung der komplementären Schnittbilder unmittelbar an die veränderte Lag der Schnittbilder angepasst wird.

4. Verfahren nach Anspruch 1,
**dadurch gekennzeichnet,**
**dass** der Betrachtungswinkel für jedes dargestellte Schnittbild individuell wählbar ist.

5. Verfahren nach Anspruch 1,
**dadurch gekennzeichnet,**
**dass** die Schnittbilder "volume-rendered" Bilder oder Projektionsbilder sind.

6. Vorrichtung zur simultanen Darstellung von wenigstens zwei Schnittbildern durch ein aus einem 3D-Bilddatensatz rekonstruiertes Volumen mit:
a) einem Bildrechner zur Erstellung und Darstellung einer Visualisierung des Volumens,
b) Mitteln zur Festlegung eines Drehpunktes in dem visualisierten Volumen,
c) Auswahlmitteln zur Auswahl einer variablen durch den Drehpunkt verlaufenden Schnittebene durch das visualisierte Volumen, und
d) Mitteln zur simultanen Darstellung zweier komplementärer Schnittbilder jeweils eines von zwei durch die Schnittebene getrennten Teil-Volumina des Volumens.

7. Computerprogramm mit Programmmitteln zur Veranlassung eines Computers zur Ausführung der Schritte des Verfahrens nach Anspruch 1.
